# EUROPEAN PATENT APPLICATION

(11) **EP 4 711 353 A1**
(43) Date of publication of application: **18.03.2026**
(21) Application number: 24200213.7
(22) Date of filing: 13.09.2024
(51) Int. Cl.: C05C 1/02, C05G 5/12

(54) **A FERTILIZER PARTICLE COMPRISING AMMONIUM NITRATE**

(71) Applicant: Yara International ASA, 0277 Oslo (NO)
(72) Inventor: Odu, Samuel, 4533 TERNEUZEN (NL); Teirlynck, Davy, 9180 MOERBEKE-WAAS (BE)
(74) Representative: AWA Sweden AB

(57) **Abstract**

The present disclosure provides a solid fertilizer particle comprising from 50 to 90 weight% of ammonium nitrate, a calcium-containing compound selected from the group consisting of dolomite, lime, calcium carbonate, and mixtures thereof, from 1.0 to 7.0 weight% of biotite, and from 0.1 to 5.0 weight% of magnesium nitrate. The present disclosure also provides a method for preparing the solid fertilizer particle.

## Description

### Field of the disclosure

The present disclosure is related to the field of fertilizers, in particular fertilizers comprising ammonium nitrate.

### Background information

Nitrogen is an essential element for the growth of any plants. Nitrogen is used to build several key components, such as proteins and chlorophyll. It is naturally present in soils under various forms, such as ammonium ions, nitrate ions, and organic molecules. However, the natural nitrogen soil content is usually too low to support extensive farming, and additional nitrogen is provided to plants in the form of fertilizers.

There are three main categories of nitrogen containing fertilizers: urea, ammonium salts, and nitrate salts. Nitrate salts are a fast-acting source of nitrogen since they can be absorbed by plant roots. Ammonium salts are a medium-acting source of nitrogen: they can be absorbed at a slow rate by plant roots, and they are converted into nitrate by bacteria present in the soil and in or on plant roots. Urea is a slow-acting source of nitrogen: it first needs to be decomposed into carbon dioxide and ammonia by urease bacteria present in the soil, and then into nitrate.

Ammonium nitrate-containing fertilizers are a common product nowadays. They can be prepared in large scale and can contain a fairly high nitrogen content. Due to safety reasons, the nitrogen content of ammonium nitrate-based fertilizers is often limited at 27 weight%. Above that, the explosive risk of the fertilizer is too high.

Fertilizer products can be produced in two forms, solid and liquid. Solid fertilizers are preferred due to their higher nutrient content, and durability and stability under storage and transport. Fertilizer particles have to tolerate several weeks of storage and transport, and several types of handling before reaching a field, so their physical characteristics are very important.

It is known that additives can be added to ammonium nitrate-based particles to improve such properties.

WO0149608A1 (Kemira Agro, 2001) and WO2007132060A1 (Kemira GrowHow, 2007) disclose the production of ammonium nitrate-based fertilizers containing phlogopite that is first treated with a strong inorganic acid, such as nitric acid, before being mixed with ammonium nitrate.

There is always a need to develop new compositions with one or more improved physical property.

### Summary of the disclosure

It was found that the addition of biotite in the production process of ammonium nitrate-based particles improved some properties of the particles. The biotite does not need to be pretreated with a strong acid before being added to the production process.

In a first aspect, the present disclosure provides a solid fertilizer particle comprising:
- from 50 to 90 weight% of ammonium nitrate;
- from 1.0 to 7.0 weight% of biotite;
- from 0.1 to 5.0 weight% of magnesium nitrate, and
- a calcium-containing compound selected from the group consisting of dolomite, lime, calcium carbonate, and mixtures thereof,
based on the total weight of the solid fertilizer particle.

In another aspect, the present disclosure provides a method for preparing solid fertilizer particles according to the first aspect, the method comprising:
- providing a first melt comprising ammonium nitrate;
- adding to the first melt biotite, a magnesium compound, and a calcium-containing compound selected from the group consisting of dolomite, lime, calcium carbonate, and mixtures thereof to obtain a second melt; and
- processing the second melt to obtain the solid fertilizer particle.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

A Calcium Ammonium Nitrate (CAN) fertilizer is a fertilizer composition comprising at least 50 weight% of ammonium nitrate and a calcium-containing compound selected from the group consisting of dolomite, lime, calcium carbonate, and mixtures thereof.

In a first aspect, the present disclosure provides a solid fertilizer particle comprising from 50 to 90 weight% of ammonium nitrate, from 1.0 to 7.0 weight% of biotite, from 0.1 to 5.0 weight% of magnesium nitrate, and a calcium-containing compound selected from the group consisting of dolomite, lime, calcium carbonate, and mixtures thereof, based on the total weight of the solid fertilizer particle.

It has been found that the addition of biotite in CAN particles improve the physical properties, such as dusting, caking, and crushing strength with or without moistening, of these particles. The new particles perform, in various tests, at least as well or better than the standard particles commercially available today, both in temperate climates, and in tropical climates.

Biotite is a group of phyllosilicate minerals within the mica group, with the chemical formula K(Mg, Fe)₃AlSi₃O₁₀(F, OH)₂, which can also be written KMgₓFe₃₋ₓAlSi₃O₁₀F_{y}OH_{2-y}, wherein x is a number comprised between 0 and 3, and y is a number comprised between 0 and 2. Biotite comprises from 36 to 38 weight% of silicium, expressed as SiO₂, from 15 to 17 weight% of aluminium, expressed as Al₂O₃, from 16 to 18 weight% of iron, expressed as FeO, from 12 to 14 weight% of magnesium, expressed as MgO, and from 9 to 11 weight% of potassium, expressed as K₂O.

As used herein, the term "biotite" refers to the unprocessed mineral, as found in nature. In WO0149608A1 and WO2007132060A1, minerals, such as phlogopite and biotite, are submitted to a digestion process using a strong inorganic acid, such as nitric acid. The resulting material is called "digested phlogopite", but it should be noted that these new materials have a very different physical aspect and chemical composition than the natural minerals.

Biotite is a mineral, which does not contain any carbon, so it contributes to reducing the explosive risk of ammonium nitrate-based compositions.

The main role of the calcium-containing compound is to reduce the explosive risk of the particle. Ammonium nitrate is an explosive and oxidizing compound, and in order to reduce the explosive risk, an inert mineral filler is added to ammonium nitrate-based fertilizer compositions. Calcium-containing compounds are among the conventional options for such inert mineral filler. They are cheap, easily available, and perform very well at reducing the explosive character of ammonium nitrate-based compositions. In addition, some of the calcium comprised in these compounds can become available to plants after the particle is applied to soils.

In some embodiments, the solid fertilizer particle comprises from 60 to 90 weight%, from 70 to 90 weight%, from 60 to 80 weight%, or from 70 to 80 weight%, of ammonium nitrate, based on the total weight of the solid fertilizer particle. Ammonium nitrate comprises about 35 weight% of nitrogen, a primary nutrient for crops.

In some embodiments, the solid fertilizer particle further comprises from 0.1 to 2.0 weight% of magnesium, based on the total weight of the solid fertilizer particle. It has been found that the addition of magnesium to a biotite-containing CAN particle can further improve some physical properties of the particle. A small amount of magnesium, below 2.0 weight%, is enough to obtain a significant improvement.

In some embodiments, the solid fertilizer particle comprises from 5.0 to 25 weight% of the calcium-containing compound, based on the total weight of the solid fertilizer particle.

In some embodiments, the solid fertilizer particle was obtained by processing a melt comprising ammonium nitrate, the calcium-containing compound, and biotite. A melt is a composition comprising compounds above their melting point. The melt may comprise a low water content, for example from 0 to 5.0 weight% of water, based on the total weight of the solid fertilizer particle.

In some embodiments, magnesium oxide and/or magnesium nitrate was introduced into the melt. It was found that magnesium oxide and magnesium nitrate were suitable magnesium sources for the fertilizer particle. They provided beneficial properties, such as reduced dusting, reduced caking, and/or increased particle strength with or without moistening, to the final particle.

In some embodiments, the solid fertilizer particle comprises from 1.0 to 5.5 weight%, from 2.0 to 5.5 weight%, or from 3.0 to 5.5 weight% of biotite, based on the total weight of the solid fertilizer particle. It was found that an amount of biotite ranging from 1.0 to 7.0 weight%, in particular from 3.0 to 5.5 weight%, improved the properties of ammonium nitrate-based fertilizer particles.

In another aspect, the present disclosure provides a method for preparing solid fertilizer particles according to the first aspect, the method comprising:
- providing a first melt comprising ammonium nitrate;
- adding to the first melt, biotite, a magnesium compound, and a calcium-containing compound selected from the group consisting of dolomite, lime, calcium carbonate, and mixtures thereof to obtain a second melt to obtain a second melt; and
- processing the second melt to obtain the solid fertilizer particle.

Producing particles from a melt allows to produce particles on a large scale with a consistent quality. A melt comprising ammonium nitrate may be obtained by different means, for example by heating up a solid composition comprising ammonium nitrate or reacting ammonia with nitric acid. Reacting ammonia with nitric acid may be performed in a suitable container or reactor. The first melt comprising ammonium nitrate may comprise from 50 to 100 weight% of ammonium nitrate and from 0 to 20 weight% of water, based on the total weight of the first melt.

In some embodiments, the first melt comprises from 50 to 100 weight%, from 60 to 100 weight%, from 70 to 100 weight%, from 50 to 90 weight%, from 60 to 90 weight%, or from 70 to 90 weight% of ammonium nitrate, based on the total weight of the first melt.

In some embodiments, the first melt comprises from 0 to 15 weight%, from 1.0 to 20 weight%, from 1.0 to 15 weight%, or from 5.0 to 15 weight% of water, based on the total weight of the first melt.

A calcium-containing compound selected from the group consisting of dolomite, lime, calcium carbonate, and mixtures thereof, and biotite are added to the first melt, thereby obtaining a second melt. The role of the calcium-containing compound is to reduce the explosive risk of the final particle and to provide some calcium to plants. Biotite is added such that the solid fertilizer particle obtained in the method comprises from 1.0 to 7.0 weight% of biotite. It was found that an amount of 1.0 to 7.0 weight% of biotite was beneficial to the physical properties of the particle. The elements comprised in biotite (K, Fe, Mg) are not readily available to plants after the application of the particle to the soil, but they may become available in the medium or long term. Having a concentration of biotite above 7.0 weight% is not interesting as it decreases the content of ammonium nitrate in the particle.

Some calcium-containing compounds, for example dolomite, may comprise magnesium, in particular in the form of magnesium carbonate. This magnesium carbonate does not react with the other components of the melt and is found in the final particle as magnesium carbonate.

The second melt may be mixed to better distribute the calcium-containing compound and the biotite within the melt. Some particulation technologies, for example pastillation and prilling, require preparing a homogeneous melt to obtain particles, which all have the same chemical composition. Other particulation technologies, such as granulation wherein the melt is sprayed, comprise an inherent mixing step, and may be performed with a melt that is not completely homogeneous.

When the second melt has the desired composition and homogeneity, it is processed to obtain solid fertilizer particles. The processing step can be performed using different technologies, such as granulation, high shear mixing, paddle mixing, prilling, spherodizing, pastillation, and prilling. These technologies can transform a melt into a solid particles with a variety of sizes and shapes.

In some embodiments, the solid fertilizer particles produced by the method have an average particle size, that can be measured by a variety of techniques, such as sieving and image analysis, ranging from 1.0 to 5.0 mm. For fertilizer products, it may be an advantage to produce particles with an average diameter ranging from 1.0 to 5.0 mm, as modern spreading devices are configured for such sizes.

In some embodiments, the biotite added to the first melt comprises from 0 to 2.0 weight%, or from 0 to 1.0 weight% of water. Commercial sources of biotite may comprise up to 5 weight% of water. In order to better control the composition of the melt during production, it may be preferred to dry the biotite, for example by heating it, such that the water content of the biotite is below 2.0 weight%, or even below 1.0 weight%.

In some embodiments, the biotite added to the first melt has a particle size with a dp50 of at most 50 µm, meaning that 50% of the particles have a particle size below 50 µm, as measured by sieving or image analysis. In some embodiments, the biotite added to the first melt has a particle size with a dp50 of at most 40 µm, of at most 30 µm, as measured by sieving or image analysis.

In some embodiments, the biotite added to the first melt has a particle size with a dp50 ranging from 20 to 50 µm, as measured by sieving or image analysis.

In some embodiments, the method further comprises adding a magnesium compound to the melt comprising ammonium nitrate, in particular wherein the magnesium compound is magnesium oxide, magnesium nitrate, or a mixture of magnesium oxide and magnesium nitrate. It has been found that the addition of magnesium to the melt and the fertilizer particle further improve the physical properties of the particle. Magnesium oxide is the compound with the highest magnesium content (60 weight%). Magnesium nitrate is an interesting magnesium source for agriculture as it is water soluble, and contains a nitrate ion, which is a nitrogen source for crops.

In some embodiments, processing the melt comprising ammonium nitrate, the calcium-containing compound, and biotite, comprises producing prills in a prilling tower or producing granules in a granulator, in particular wherein the granulator is a fluidized bed granulator, a drum granulator, or a pan granulator.

In some embodiments, adding to the melt comprising ammonium nitrate, a calcium-containing compound selected from the group consisting of dolomite, lime, calcium carbonate, and mixtures thereof, is performed such that the solid fertilizer particles produced by the method comprise from 5.0 to 25 weight% of the calcium-containing compound.

In another aspect the present disclosure provides the use of biotite in the production of solid fertilizer particles comprising ammonium nitrate for improving the physical properties thereof.

### Example 1

To a melt comprising ammonium nitrate and water was added biotite, a magnesium source (magnesium oxide or magnesium nitrate), and dolomite. The mixture was mixed for a few minutes, heated up to reduce the water content to 2-3 weight%, and granulated in a fluidized bed granulator. Comparative examples were produced using only dolomite and magnesium nitrate. These particles represent the best performing CAN particles commercially available in 2024.

The composition of the particles produced for the experiment is detailed in Table 1. All the values are given in weight%, based on the total weight of the particles.

**Table 1**

| Entry | Ammonium Nitrate | Dolomite | Biotite | Mg(NO₃)₂ | MgO |
|---|---|---|---|---|---|
| 1 | 75.8 | 22.7 | 0 | 1.7 | 0 |
| 2 | 75.8 | 20.0 | 3.5 | 0 | 0.4 |
| 3 | 75.8 | 18.5 | 5.0 | 0 | 0.4 |
| 4 | 75.2 | 19.6 | 3.5 | 1.4 | 0 |

A series of tests was performed on the particles produced: crushing strength, dust potential, caking index, and impact resistance. For each test, the results are converted into a score, where top performance obtains 25 points. The results for the tests are given in Table 2.

**Table 2**

| Entry | Crushing strength | Dust potential | Caking index | Impact resistance | Total score |
|---|---|---|---|---|---|
| 1 | 15 | 23 | 24 | 25 | 87 |
| 2 | 19 | 23 | 25 | 25 | 92 |
| 4 | 19 | 23 | 25 | 25 | 92 |

It can be seen that the introduction of biotite and MgO replacing the magnesium nitrate and some of the dolomite has a positive impact on the crushing strength and the caking index of the particles while maintaining the performance in the other tests.

The particles were also tested for their performance in a tropical climate: hygroscopicity, crushing strength after moistening, caking index after moistening, and swelling, were also measured. For each test, the results are converted into a score, where top performance obtains 17 points. The results for the tests are given in Table 3.

**Table 3**

| Entry | Crushing strength | Dust potential | Hygroscopicity | Crushing strength af.m.* | Caking index af.m.* | Swelling | Total score |
|---|---|---|---|---|---|---|---|
| 1 | 10 | 15 | 14 | 10 | 15 | 14 | 78 |
| 2 | 13 | 15 | 13 | 12 | 12 | 13 | 78 |
| 4 | 13 | 15 | 13 | 12 | 13 | 15 | 82 |

| | | | | | | | |
|---|---|---|---|---|---|---|---|
| **af.m. = after moistening* | | | | | | | |

The particles containing biotite perform as well or better than the control particles containing only dolomite and magnesium nitrate.

Table 4 presents more detailed data of the crushing strength (CS) of the particles prepared as above. Some particles are submitted to 5 heating cycles, wherein a heating cycle consists in heating up the particles from room temperature to 50°C and cooling them back to room temperature. Some particles are subjected to a moistening step: the particles are placed in a climate chamber at 20 °C and 80% relative humidity. Some particles are subjected to a moistening step, followed by 5 heating cycles as above. These tests simulate the conditions that particles shipped to tropical regions are submitted to and are a good indication of the behavior of the particles during storage and transport. The crushing strength is measured by applying a weight to a particle until it fractures.

**Table 4**

| Entry | CS as received [kg] | CS after 5 heating cycles [kg] | CS after 8hr moistening [kg] | CS after 8hr moistening + 5 heating cycles [kg] |
|---|---|---|---|---|
| 1 | 4.8 | 2.9 | 4.6 | 2.8 |
| 2 | 6.2 | 3.8 | 5.6 | 5.5 |
| 4 | 6.0 | 3.3 | 5.3 | 3.9 |

It can be seen that the particles containing biotite and magnesium nitrate perform much better than the particles containing only magnesium nitrate.

## Claims

1. A solid fertilizer particle comprising:
- from 50 to 90 weight% of ammonium nitrate;
- from 1.0 to 7.0 weight% of biotite;
- from 0.1 to 5.0 weight% of magnesium nitrate, and
- a calcium-containing compound selected from the group consisting of dolomite, lime, calcium carbonate, and mixtures thereof,
based on the total weight of the solid fertilizer particle.

2. The solid fertilizer particle according to claim 1, wherein the solid fertilizer particle comprises from 0.1 to 2.5 weight% of magnesium nitrate, based on the total weight of the solid fertilizer particle.

3. The solid fertilizer particle according to claim 1 or 2, wherein the solid fertilizer particle comprises from 5.0 to 25 weight% of the calcium-containing compound, based on the total weight of the solid fertilizer particle.

4. The solid fertilizer particle according to any one of claims 1 to 3, wherein the solid fertilizer particle comprises from 1.0 to 5.5 weight% of biotite, based on the total weight of the solid fertilizer particle.

5. The solid fertilizer particle according to any one of claims 1 to 4, wherein the solid fertilizer particle comprises from 60 to 90 weight% of ammonium nitrate, based on the total weight of the solid fertilizer particle.

6. A method for preparing a solid fertilizer particle according to any one of claims 1 to 5, the method comprising:
- providing a first melt comprising ammonium nitrate;
- adding to the first melt biotite, a magnesium compound, and a calcium-containing compound selected from the group consisting of dolomite, lime, calcium carbonate, and mixtures thereof to obtain a second melt; and
- processing the second melt to obtain the solid fertilizer particle.

7. The method according to claim 6, wherein the magnesium compound is magnesium oxide, magnesium nitrate, or a mixture of magnesium oxide and magnesium nitrate.

8. The method according to claim 6 or 7, wherein processing the second melt comprising ammonium nitrate, the calcium-containing compound, magnesium nitrate, and biotite comprises producing prills in a prilling tower or producing granules in a granulator.

9. The method according to claim 8, wherein the granulator is a fluidized bed granulator, a drum granulator, or a pan granulator.

10. The method according to any one of claims 6 to 9, wherein the biotite added to the first melt comprises from 0 to 2.0 weight% of water.

11. The method according to any one of claims 6 to 10, further comprising mixing the second melt comprising ammonium nitrate, magnesium nitrate, the calcium-containing compound, and biotite before processing.

12. The use of biotite in the production of solid fertilizer particles comprising ammonium nitrate.
